# EUROPEAN PATENT SPECIFICATION

(11) **EP 0 404 336 B1**
(45) Date of publication and mention of the grant of the patent: **02.03.1994**
(21) Application number: 90305272.8
(22) Date of filing: 16.05.1990
(51) Int. Cl.: F02M 51/06, F02M 61/08, F16K 31/06, F02M 61/16

(54) **Solenoid-actuated valve assembly**
Elektromagnetisch betätigtes Ventil
Soupape actionnée électromagnétiquement

(30) Priority: 21.06.1989 US 369508
(43) Date of publication of application: 27.12.1990
(73) Proprietor: GENERAL MOTORS CORPORATION, Detroit Michigan 48202 (US)
(72) Inventor: Weinand, Louis Harry, Troy, Michigan 48098 (US)
(74) Representative: Denton, Michael John

(56) References cited:
- DE-A- 3 808 671
- DE-C- 835 672

## Description

### Technical field

This invention relates to a solenoid-actuated valve assembly suitable for use as an injector adapted to deliver a fuel-air charge directly into an engine combustion chamber as specified in the preamble of claim 1, for example as disclosed in DE-A-38 08 671.

### Background

United States patent 4,759,335 issued 26 July 1988 in the names of P. W. Ragg, M. L. McKay and R. S. Brooks, and international patent application publication WO 86/00960 published 13 February 1986 in the name of M. L. McKay, show embodiments of a injector that delivers a fuel-air charge directly into the combustion chamber of a two-stroke cycle engine. The injector has a valve that is opened by a solenoid to allow the fuel-air charge to be delivered into the combustion chamber, and that is closed against a seat by a spring to terminate delivery of the fuel-air charge.

Experience with injectors of that nature has revealed a tendency for the valve to bounce repeatedly on and off its seat when the spring attempts to close the valve. As a result, the injector does not terminate delivery of the fuel-air charge as intended.

### Summary of the invention

This invention provides a solenoid-actuated valve assembly constructed to prevent bounce of the valve.

In a solenoid-actuated valve assembly as disclosed in DE-A-38 08 671, the solenoid armature and the valve are provided as separate elements. The armature is biased by a light spring to engage the valve. This construction directly couples the armature and the valve is opened, but allows the armature to separate from the valve as the valve engages its seat. Thus with this construction, the valve-closing kinetic energy of the armature is not dissipated as the valve engages its seat, and valve bounce is reduced.

A solenoid-actuated valve assembly according to this invention is characterised by the features specified in the characterising portion of claim 1.

In a solenoid-actuated valve assembly according to this invention, a stop made from a resilient, high energy-absorbing material such as Viton is provided to dissipate the kinetic energy of the armature. The stop is spaced from the armature under static conditions, and accordingly does not affect the closing force on the valve or suffer from creep or compression set.

The invention also provides a solenoid-actuated valve assembly with readily accessible means for adjusting the force exerted by a valve-closing spring, the travel of the valve between its closed and open positions, and the spacing between the armature and the stop.

The details as well as other features and advantages of two embodiments of an injector employing this invention are set forth in the remainder of the specification and are shown in the accompanying drawings.

### Summary of the drawings

Figure 1 is a sectional view of one embodiment of an injector employing this invention, having a resilient disk that dissipates the armature energy.

Figure 2 is an enlarged view of a portion of Figure 1, showing details of the top of the valve stem, the armature, the resilient disk, and the adjustments.

Figure 3 is a view similar to Figure 2, showing another embodiment in which a resilient ring dissipates the armature energy.

Figures 4a and 4b illustrate the operation of an injector employing this invention.

Figures 5a and 5b illustrate the operation of a prior art injector.

### The preferred embodiments

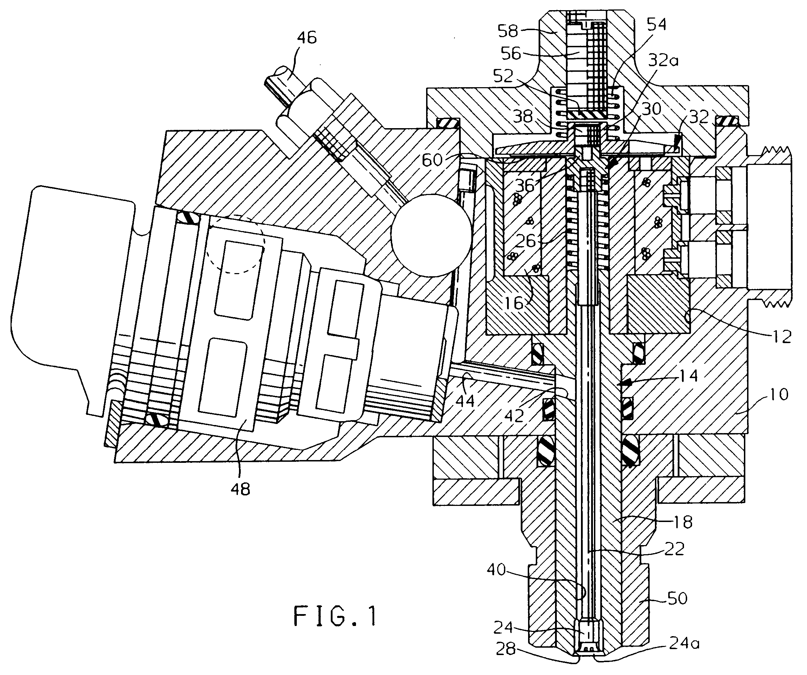

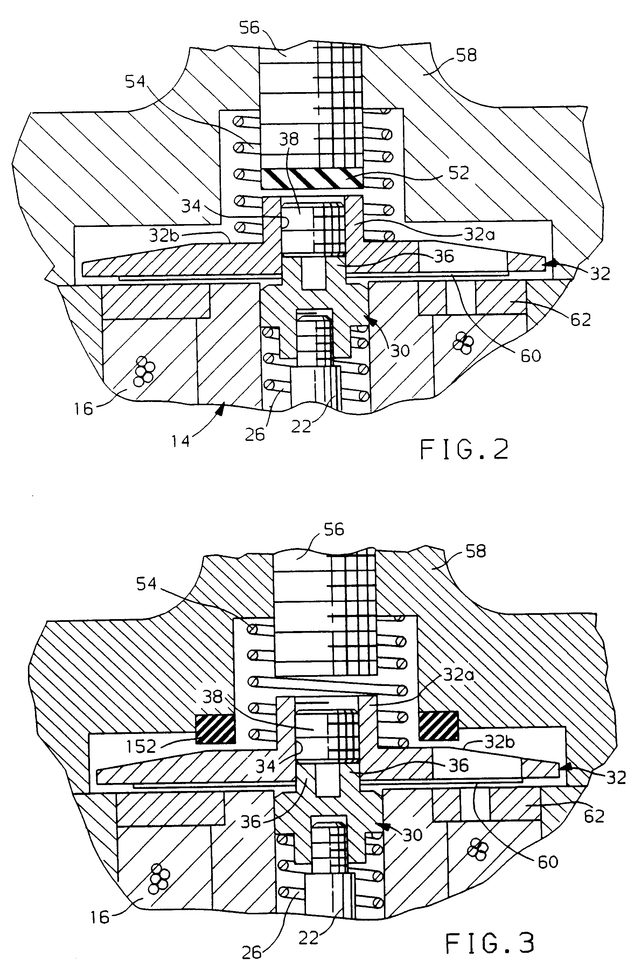

Referring first to Figures 1 and 2, an air-fuel rail body 10 has a stepped bore 12 receiving an injector 14 adapted to deliver a fuel-air charge directly into the combustion chamber of a two-stroke cycle engine (not shown). Injector 14 includes a solenoid coil 16 received in the upper portion of bore 12, and a nozzle 18 received in the lower portion of bore 12.

An upper portion of nozzle 18 acts as a guide for a stem 22 of a charge-delivery valve 24. A valve return spring 26 biases valve 24 to engage its head 24a with a valve seat 28 on a lower end of nozzle 18. Spring 26 is seated against nozzle 18 and acts on a valve stem cap 30 threaded onto the upper end of stem 22. The position of cap 30 is adjusted on stem 22 to establish the valve-closing force of spring 26.

An armature 32 has a central bore 34 guided on a tip 36 of cap 30. An adjusting screw 38 is threaded into bore 34 for engagement with tip 36.

Nozzle 18 has a central bore 40 with a lateral aperture 42 that is aligned with a passage 44 in body 10. Passage 44 receives air from an inlet 46 and fuel from a fuel-metering device 48.

Nozzle 18 is received in a holder 50 that is adapted to extend into the combustion chamber of the engine.

When coil 16 is energized, armature 32 is attracted downwardly and, acting through screw 38, cap 30 and stem 22, displaces valve head 24a from seat 28 against the bias of spring 26. Injector 14 thereby delivers a charge of fuel and air from passage 44 through bore 40 into the combustion chamber.

When coil 16 is de-energized, spring 26 lifts cap 30 and stem 22 to engage valve head 24a with seat 28, at the same time lifting armature 32. However, when valve head 24a engages seat 28, the inertia of armature 32 causes the adjusting screw 38 carried by armature 32 to separate from cap 30, and armature 32 continues upward. A projection 32a on armature 32 then engages a stop in the form of a resilient disk 52, and the kinetic energy of armature 32 is dissipated by disk 52.

Armature 32 is guided at all times by the tip 36 of cap 30, and a light spring 54 biases armature 32 downwardly to re-engage adjusting screw 38 with the tip 36 of cap 30.

Because armature 32 continues its upward motion during the impact of valve 24 with seat 28, only the kinetic energy of valve 24 (including valve stem cap 30) must be dissipated during the impact of valve 24 with seat 28. That kinetic energy is dissipated without creating substantial bounce of valve 24.

Moreover, using disk 52 to dissipate the kinetic energy of armature 32 assures that armature 32 will not cause valve 24 to bounce as spring 54 re-engages the armature adjusting screw 38 with cap 30.

Disk 52 is secured on the end of an adjusting screw 56 that is mounted in the injector cover 58. Adjusting screw 56 is set to provide a slight clearance between armature 32 and disk 52 when the armature screw 38 engages cap 30. The resilience of disk 52 accordingly does not affect the valve-closing force provided by spring 26, and disk 52 is not subject to the creep and compression set that might otherwise occur if armature 32 were to continually engage disk 52.

The bottom of armature 32 includes pads 60 that engage the top plate 62 of coil 16 when coil 16 is energized. Adjusting screw 38 provides a means for establishing the desired distance gap between pads 60 and plate 62 when coil 16 is not energized, thereby establishing the travel of armature 32 and consequently establishing the travel of valve 24 between its closed and open positions.

Although the force of spring 54 opposes the force of spring 26, spring 54 is lighter than spring 26 and accordingly is not effective to open valve 24. Nevertheless, it will be appreciated that the valve-closing force provided by spring 26 also could be calibrated by selecting an alternative spring 54 that is somewhat lighter or heavier than the original spring 54, or by providing an adjustment for the force exerted by spring 54.

As shown in Figure 3, disk 52 may be replaced by a ring 152 of resilient material. Ring 152 is engaged by an annular region 32b on armature 32 to dissipate the kinetic energy of armature 32 as armature 32 continues its upward movement after valve 24 engages seat 28.

Although Figure 2 shows the contacting surfaces of disk 52 and armature projection 32a to be flat and parallel, they may be contoured relative to one another to more gradually dissipate the kinetic energy of armature 32. For example, as shown in Figure 3, a portion of the annular region 32b of armature 32 is at an angle to the ring 152 so the kinetic energy of armature 32 is dissipated gradually.

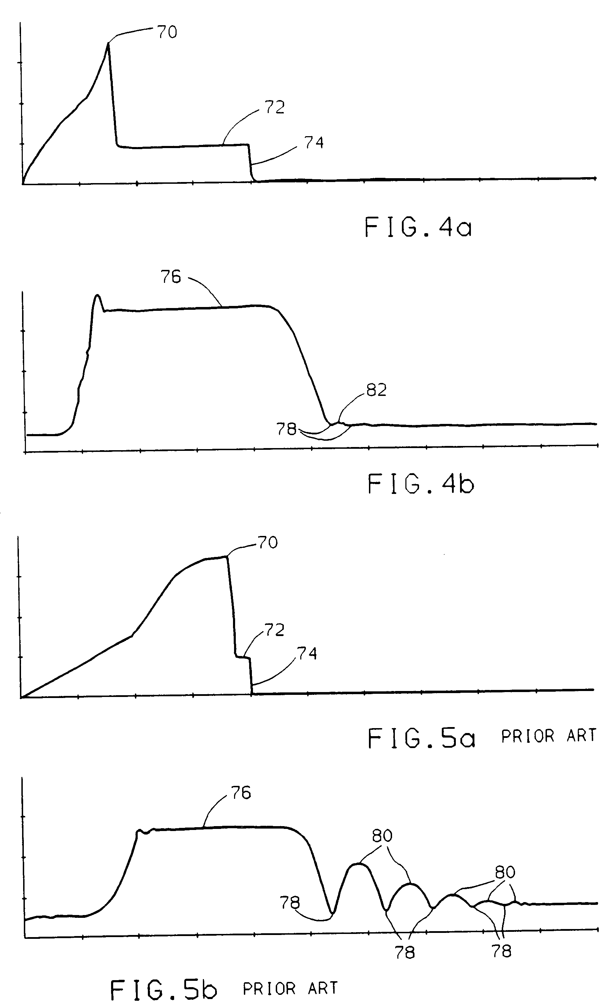

The benefit provided by this invention is clear from a comparison of Figures 4a and 4b showing the operation of an injector employing this invention with Figures 5a and 5b showing the operation of a prior art injector.

The current through the injector solenoid coils is shown along the vertical axes of Figures 4a and 5a, and time along the horizontal axes. For each injector, an 8 ampere peak current indicated at 70 was provided to open the valve, a 2 ampere holding current indicated at 72 was provided to hold the valve open, and the current was terminated at 74 to close the valve.

The position of the injector valves is shown along the vertical axes of Figures 4b and 5b, and time along the horizontal axes. Each injector valve reached its fully open position 76 a short time before its current reached the 8 ampere peak 70, and reached its closed position 78 a short time after its current was terminated at 74.

In this comparison, the injector represented in Figures 4a and 4b opened more rapidly than the injector represented in Figures 5a and 5b, and accordingly the current was reduced from the 8 ampere peak current to the 2 ampere holding current sooner for the injector represented in Figures 4a and 4b than for the injector represented in Figures 5a and 5b.

Despite the difference in the vertical scales of Figures 4b and 5b, the two injector valves actually opened the same distance. Moreover, it should be noted that the two valves also had nearly identical closing times.

As is clearly illustrated by peaks 80, however, the valve in the prior-art injector bounced open several times after initially closing. On the other hand, the valve in the injector employing this invention had only one, nearly imperceptible, bounce 82.

It will be appreciated that this invention may be employed in other applications as well as the fuel-air charge injectors depicted here.

## Claims

1. A solenoid-actuated valve assembly (10) for controlling delivery of a fluid, the assembly comprising a valve seat (28), a valve (24) engageable with the valve seat (28) to terminate fluid delivery therethrough, a solenoid coil (16), an armature (32) effective to displace the valve (24) from the seat (28) when the coil (16) is energized, a valve return spring (26) effective to engage the valve (24) with the seat (28) when the coil (16) is de-energized, in which operation the armature (32) separates from the valve (24) as the valve (24) engages the seat (28), and a stop (52;152) engaged by the armature (32) after the armature (32) separates from the valve (24), characterised in that the stop (52;152) engaged by the armature (32) after the armature separates from the valve (24) is made from a resilient, high energy-absorbing, rubber-like material, so that the kinetic energy of the armature (32) is dissipated by engagement of armature (32) with the resilient stop (52;152).

2. A solenoid-actuated valve assembly (10) according to claim 1, characterised in that the armature (32) is guided on a portion of the valve (24).

3. A solenoid-actuated valve assembly (10) according to claim 1 or 2, characterised in that the stop comprises a resilient disk (52) engaged by the armature (32).

4. A solenoid-actuated valve assembly (10) according to claim 1 or 2, characterised in that the stop comprises a resilient ring (152) engaged by the armature (32).

5. A solenoid-actuated valve assembly (10) according to claim 1 or 2, characterised in that the position of the stop (52) is adjustable.

6. A solenoid-actuated valve assembly (10) according to any one of claims 1 to 5, characterised in that the armature (32) is biased to engage the valve (24).

7. A solenoid-actuated valve assembly (10) according to any one of claims 1 to 6, characterised in that the armature (32) includes an adjusting screw (38) that establishes the position of the armature (32) relative to the valve (24) and thereby establishes the distance between the closed and open positions of the valve (24).

8. A solenoid-actuated valve assembly (10) according to claim 1, characterised in that said valve (24) includes a valve head (24a) engageable with the valve seat (28) to terminate fluid delivery, a valve stem (22) and a valve stem cap (30) threaded onto the valve stem (22); said armature (32) has a central bore (34) guided on a tip (36) of the cap (30); a spring (54) biases the armature (32) to engage the cap (30); said valve return spring (26) acts on the cap (30) to engage the valve (24) with the seat (28) when the coil (16) is de-energized, the position of the cap (30) on the stem (22) being adjustable to establish the force applied by the valve return spring (26) to the valve (24); there is an adjusting screw (56) supporting the stop (52) and establishing the distance between the stop (52) and the armature (32); and the armature (32) has an adjusting screw (38) that provides the engagement between the armature (32) and the cap (30), the armature-adjusting screw (38) establishing the position of the armature (32) relative to the valve (24) and thereby establishing the distance between the closed and open positions of the valve (24).

## Patentansprüche

1. Eine elektromagnetisch betätigte Ventilanordnung (10) zur Steuerung der Abgabe eines Fluids, wobei die Anordnung umfasst : einen Ventilsitz (28), ein Ventil (24), das mit dem Ventilsitz (28) in Eingriff treten kann, um eine Fluid-Abgabe durch dieses zu beenden, eine Elektromagnet-Spule (16), einen Anker (32), der zur Verschiebung des Ventils (24) vom Sitz (28) wirksam ist, wenn die Spule (16) erregt wird, eine Ventil-Rückstellfeder (26), die wirksam ist, um das Ventil (24) mit dem Sitz (28) in Eingriff zu bringen, wenn die Spule (16) entregt wird, bei welchem Betrieb sich der Anker (32) von dem Ventil (24) trennt, wenn das Ventil (24) mit dem Sitz (28) in Eingriff kommt und einen Anschlag (52;152), der mit dem Anker (32) in Eingriff gebracht wird, nachdem sich der Anker (32) von dem Ventil (24) trennt, dadurch gekennzeichnet, daß der Anschlag (52;152), der mit dem Anker (32) In Eingriff gebracht wird, nachdem sich der Anker von dem Ventil (24) trennt, aus einem elastischen, hoch Energie-absorbierenden, gummiartigen Material hergestellt ist, so daß die kinetische Energie des Ankers (32) durch das Eingreifen des Ankers (32) an den elastischen Anschlag (52;152) aufgenommen wird.

2. Eine elektromagnetisch betätigte Ventilanordnung (10) nach Anspruch 1, dadurch gekennzeichnet, daß der Anker (32) auf einem Teil des Ventils (24) geführt ist.

3. Eine elektromagnetisch betätigte Ventilanordnung (10) nach Anspruch 1 oder 2, dadurch gekennzeichnet, daß der Anschlag eine elastische Scheibe (52) umfasst, die mit dem Anker (32) in Eingriff gebracht wird.

4. Eine elektromagnetisch betätigte Ventilanordnung (10) nach Anspruch 1 oder 2, dadurch gekennzeichnet, daß der Anschlag einen elastischen Ring (152) umfasst der mit dem Anker (32) in Eingriff gebracht wird.

5. Eine elektromagnetisch betätigte Ventilanordnung (10) nach Anspruch 1 oder 2, dadurch gekennzeichnet, daß die Position des Anschlags (52) einstellbar ist.

6. Eine elektromagnetisch betätigte Ventilanordnung (10) nach einem der Ansprüche 1 bis 5, dadurch gekennzeichnet, daß der Anker (32) vorgespannt ist, um mit dem Ventil (24) in Eingriff zu treten.

7. Eine elektromagnetisch betätigte Ventilanordnung (10) nach einem der Ansprüche 1 bis 6, dadurch gekennzeichnet, daß der Anker (32) eine Einstellschraube (38) umfasst. die die Position des Ankers (32) relativ zu dem Ventil (24) festlegt und dadurch den Abstand zwischen der geschlossenen und offenen Position des Ventils (24) festlegt.

8. Eine elektromagnetisch betätigte Ventilanordnung (10) nach Anspruch 1, dadurch gekennzeichnet, daß das Ventil (24) einen Ventilkopf (24a), der mit dem Ventilsitz (28) in Eingriff treten kann, um eine Fluid-Abgabe zu beenden, einen Ventilschaft (22) und eine auf den Ventilschaft (22) geschraubte Ventilschaftkappe (30) umfasst; daß der Anker (32) eine auf der Spitze (36) der Kappe (30) geführte Zentral-Bohrung (34) hat; daß eine Feder (54) den Anker (32) vorspannt, um mit der Kappe (30) in Eingriff zu treten; daß die Ventil-Rückstellfeder (26) auf die Kappe (30) wirkt, um das Ventil (24) mit dem Sitz (28) in Eingriff zu bringen, wenn die Spule (16) entregt wird und die Position der Kappe (30) auf dem Schaft (22) einstellbar ist, um die von der Ventil-Rückstellfeder (26) an das Ventil (24) angelegte Kraft festzulegen; daß es eine Einstellschraube (56) gibt, die den Anschlag (52) trägt und den Abstand zwischen dem Anschlag (52) und dem Anker (32) festlegt; und daß der Anker (32) eine Einstellschraube (38) hat, die den Eingriff zwischen dem Anker (32) und der Kappe (30) schafft, wobei die Anker-Einstellschraube (38) die Position des Ankers (32) relativ zu dem Ventil (24) festlegt und dadurch den Abstand zwischen der geschlossenen und offenen Position des Ventils (24) festlegt.

## Revendications

1. Ensemble (10) à soupape commandé par un électro-aimant et destiné à régler la distribution d'un fluide, l'ensemble comprenant un siège (28) de soupape, une soupape (24) destinée à coopérer avec le siège (28) et à interrompre la distribution du fluide qui circule, un enroulement (16) d'électro-aimant, une armature (32) destinée à déplacer la soupape (24) du siège (28) lorsque l'enroulement (16) est excité, un ressort (26) de rappel de soupape destiné à mettre la soupape (24) au contact du siège (28) lorsque l'enroulement (16,) est désexcité, et, dans cette opération, l'armature (32) se sépare de la soupape (24) lorsque la soupape (24) est au contact du siège (28), et un organe d'arrêt (52 ; 152) qui est au contact de l'armature (32) après que l'armature (32) s'est séparée de la soupape (24), caractérisé en ce que l'organe d'arrêt (52 ; 152) au contact duquel vient l'armature (32) lorsqu'elle s'est séparée de la soupape (24) est formé d'un matériau élastique analogue à du caoutchouc, ayant des propriétés élevées d'absorption d'énergie, afin que l'énergie cinétique de l'armature (32) se dissipe par contact de l'armature (32) avec l'organe élastique d'arrêt (52 ; 152).

2. Ensemble (10) à soupape commandé par un électro-aimant selon la revendication 1, caractérisé en ce que l'armature (32) est guidée sur une partie de la soupape (24).

3. Ensemble (10) à soupape commandé par un électro-aimant selon la revendication 1 ou 2, caractérisé en ce que l'organe d'arrêt est un disque élastique (52) placé au contact de l'armature (32).

4. Ensemble (10) à soupape commandé par un électro-aimant selon la revendication 1 ou 2, caractérisé en ce que l'organe d'arrêt est une bague élastique (152) placée au contact de l'armature (32).

5. Ensemble (10) à soupape commandé par un électro-aimant selon la revendication 1 ou 2, caractérisé en ce que la position de l'organe d'arrêt (52) est réglable.

6. Ensemble (10) à soupape commandé par un électro-aimant selon l'une des revendications 1 à 5, caractérisé en ce que l'armature (32) est rappelée afin qu'elle vienne au contact de la soupape (24).

7. Ensemble (10) à soupape commandé par un électro-aimant selon l'une des revendications 1 à 6, caractérisé en ce que l'armature (32) comprend une vis de réglage (38) qui établit la position de l'armature (32) par rapport à la soupape (24) et établit ainsi la distance comprise entre les positions de fermeture et d'ouverture de la soupape (24).

8. Ensemble (10) à soupape commandé par un électro-aimant selon la revendication 1, caractérisé en ce que la soupape (24) comprend une tête (24a) de soupape destinée à être au contact du siège (28) afin d'arrêter la distribution du fluide, une tige (22) de soupape et un capuchon (30) de tige vissé sur la tige (22) de la soupape, l'armature (32) a un alésage central (34) guidé sur un bout (36) du capuchon (30), un ressort (54) rappelle l'armature (32) afin qu'elle soit au contact du capuchon (30), le ressort (26) de rappel de soupape agit sur le capuchon (30) afin qu'il mette en contact la soupape (24) et le siège (28) lorsque l'enroulement (16) est désexcité, la position du capuchon (30) sur la tige (22) pouvant être réglée pour l'établissement de la force appliquée par le ressort (26) de rappel de soupape à la soupape (24), une vis de réglage (56) supporte l'organe d'arrêt (52) et établit la distance comprise entre l'organe d'arrêt (52) et l'armature (32), et l'armature (32) a une vis de réglage (38) qui assure le contact entre l'armature (32) et le capuchon (30), la vis (38) de réglage d'armature établissant la position de l'armature (32) par rapport à la soupape (24) et établissant ainsi la distance entre les positions de fermeture et d'ouverture de la soupape (24).
